# EUROPÄISCHE PATENTSCHRIFT

(11) **EP 1 633 524 B1**
(45) Veröffentlichungstag und Bekanntmachung des Hinweises auf die Patenterteilung: **19.09.2007**
(21) Anmeldenummer: 04727519.3
(22) Anmeldetag: 15.04.2004
(51) Int. Cl.: B23Q 1/00, B23Q 3/18, B23Q 11/00, B23Q 16/02, B23Q 7/14

(54) **SCHNELLSPANNZYLINDER MIT FÜHRUNGSEINRICHTUNG FÜR DEN EINZUGSNIPPEL**
QUICK-ACTION COUPLING CYLINDER COMPRISING A GUIDING DEVICE FOR THE NIPPLE
CYLINDRE DE SERRAGE RAPIDE COMPRENANT UN MECANISME DE GUIDAGE DU BOULON DE SERRAGE

(30) Priorität: 15.04.2003 DE 10317341
(43) Veröffentlichungstag der Anmeldung: 15.03.2006
(60) Teilanmeldung: 07000973.3
(73) Patentinhaber: SSA System-Spann AG, 8032 Zürich (CH)
(72) Erfinder: STARK, Emil, A-6840 Götzis (AT)
(74) Vertreter: Riebling, Peter
(86) Internationale Anmeldenummer: PCT/EP2004/003945
(87) Internationale Veröffentlichungsnummer: WO 2004/091862

(56) Entgegenhaltungen:
- EP-A- 0 459 544
- EP-A- 1 344 599
- WO-A-96/29176
- DE-U1- 20 219 340
- US-A- 4 577 847
- US-A- 5 415 384

## Beschreibung

Die Erfindung betrifft einen Schnellspannzylinder mit Führungseinrichtung nach dem Oberbegriff des Patentanspruches 1.

Mit der eigenen DE 101 23 270 A1 ist bereits schon ein Schnellspannzylinder mit hub-angetriebenem Einzugsnippel bekannt geworden. Dort wurde in dem Gehäuse des Schnellspannzylinders ein Hubkolben angeordnet, der in der zentralen Mittenausnehmung des Schnellspannzylinders durch die Verriegelungseinrichtung hindurch bewegbar angetrieben war. Ziel dieser Maßnahme war, den Hubkolben soweit aus der zentralen Aufnahmeöffnung im Schnellspannzylinder herauszufahren, dass man den Einzugsnippel, der an der Unterseite der Werkstückpalette angeordnet war, schonend auf die Oberseite des Hubkolbens aufsetzen konnte, um so den Einzugsnippel möglichst beschädigungsfrei in den Innenraum des Schnellspannzylinders einfahren zu können.

Bei dieser Anordnung war jedoch ein vollständiger Schutz des Einzugsnippels gegen Beschädigung in der zentralen Ausnehmung noch nicht gewährleistet. Zum Einen fehlte es an einer zentrierenden Zuordnung zwischen dem Einzugsnippel und der Oberfläche des Hubkolbens, weil die beiden Teile jeweils lediglich mit flachen Anschlagflächen aufeinander saßen. Zum anderen war der Einzugsnippel so gestaltet, dass er in Richtung auf die Aufnahmeöffnung flach ausgebildet war, so dass nur ein Versatzspiel von 2,5 mm zwischen den einander zugeordneten Teilen erlaubt war. Nur im Bereich des Versatzspiels war es möglich, den Einzugsnippel zu versetzen, um dennoch die zentrale Aufnahmeöffnung im Schnellspannzylinder zu treffen.

Das Versatzspiel war jedoch für die meisten Anwendungsfälle zu gering. Es konnte daher vorkommen, dass der Einzugsnippel - insbesondere wenn er an schweren Werkstückpaletten befestigt war - aufgrund des Gewichts der Werkstückpalette über das Versatzspiel hinaus versetzt wurde und der Nippel seitlich neben die Aufnahmeöffnung auf den Deckel des Schnellspannzylinders aufgesetzt wurde. Dies bedeutete eine beträchtliche Beschädigungsgefahr. Darüber hinaus, war die Werkstückpalette mit dem Hubzeug so zu manövrieren, dass der Einzugsnippel in die zentrale Aufnahmeöffnung des Schnellspannzylinders traf.

Wurde der Einzugsnippel nur geringfügig neben die zentrale Aufnahmeöffnung im Schnellspannzylinder aufgesetzt, dann wurde während des weiteren Einzugsvorganges durch einen Maschinenbefehl der Hubkolben in die zentrale Aufnahmeöffnung des Schnellspannzylinders zurückgefahren, mit dem Ziel, auch den Einzugsnippel mit abzusenken. Nachdem dieser aber geringfügig seitlich versetzt auf der Aufnahmeöffnung des Schnellspannzylinders aufsaß, fiel dieser ruckartig in die zentrale Aufnahmeöffnung ein. Ein schonendes Einziehen war dann nicht mehr gegeben. In einem solchen unerwünschten Betriebsfall konnte sogar die Aufnahmeöffnung am Schnellspannzylinder beschädigt werden.

Insbesondere bei sehr großen Werkstückpaletten von Abmessungen mit bis zu 1 Meter mal 2 Meter und entsprechend tonnenschwerem Gewicht war es schwierig, derartige Einzugsnippel beschädigungsfrei über einen relativ gering tolerierten Einlaufdurchmesser in die zentrale Aufnahmeöffnung im Schnellspannzylinder mittels eines Krans einzufahren. Das Einfahren war insbesondere auch deshalb erschwert, weil bei derartig großen Werkstückpaletten eine optische Kontrolle nicht mehr ohne Weiteres möglich war. Die Einzugsnippel sind an der Unterseite der großen Werkstückpalette nur schwierig zu sehen und ein gesteuertes Einführen der Einzugsnippel in die kaum sichtbaren Einführöffnungen war unter optischer Kontrolle nicht gegeben.

Mit der Druckschrift DE 202 19 340 U1 wird eine Spanneinrichtung nach dem Oberbegriff von Anspruch 1 zur Befestigung eines Einzugsbolzens mit seitlicher Rollelementzuführung offenbart, wobei die Rollelemente in einem Käfig gehalten sind und in einen Außenbereich einer Aufnahmeöffnung nach innen gedrückt werden, um eine auf die Einführrichtung des Einzugsbolzens bezogen seitliche Außenflächen an einem Hinterschnitt zu greifen und den Einzugsbolzen in der Aufnahmeöffnung klemmt, wobei die Rollenelemente durche eine seitliche Öffnung eines die Aufnahmeöffnung seitlich umgebenden Spanneinrichfiungsteils in den Käfig eingeführt sind.
Diese Druckschrift weist den Nachteil auf, dass der Einzugsbolzen keine abgeschrägten Konusschrägen aufweist, welche mit den Konusschrägen in der Aufnahme zusammenwirken, um eine hochgenaue Positionierung und Festlegung eines Einzugsbolzens zu gewährleisten.

Der Erfindung liegt deshalb die Aufgabe zugrunde, ein gesteuertes, sicheres und beschädigungsfreies Einfahren von Einzugsnippeln in die zentrale Öffnung von Schnellspannzylindern zu verbessern und zu erleichtern.

Zur Lösung der gestellten Aufgabe weist die Erfindung die Merkmale des Anspruchs 1 oder 4 auf.

Damit wird eine verbesserte Führungseinrichtung für den Einzugsnippel vorgeschlagen, da der Einzugsnippel ein großes, seitliches Versatzspiel aufweist.

In einer bevorzugten Ausgestaltung der Erfindung ist es vorgesehen, dass die Stirnseite des Einzugsnippels nach hinten abgeschrägte Konusschrägen aufweist, so dass eine Konusspitze mit einer zugeordneten - entgegengesetzt geschrägten Konusausnehmung im Hubkolben zusammenwirkt.

In einer anderen Ausgestaltung der Erfindung ist es vorgesehen, dass anstatt einer Konusspitze in kinematischer Umkehrung eine Konusvertiefung angeordnet ist, die mit einer zugeordneten, konisch ausgebildeten Spitze an der Oberseite des Hubkolbens zusammenwirkt.
Bei dem erstgenannten Ausführungsbeispiel (Konusspitze an der Stirnseite des Einzugsnippels) ergibt sich der Vorteil, dass ein um 400 % größerer Fangweg des Einzugsnippels in die Einfahröffnung am Schnellspannzylinder gegeben ist, als vergleichsweise beim Stand der Technik.

Aufgrund der konisch angeschrägten Spitze kann der Einzugsnippel über die gesamte - relativ schmale Stirnseite - nun in die zentrale Aufnahmeöffnung im Schnellspannzylinder einfahren, wodurch sich ein Versatzweg von beispielsweise 12,5 mm ergibt, gegenüber einem üblichen Versatzweg von 2,5 mm nach der DE 101 23 270 A1.

Dieser Versatzweg von 12,5 mm ist nach allen Seiten von einer zentralen Mittellinie ausgehend gegeben, während bei dem Stand der Technik nur ein Versatz von maximal 2,5 mm nach einer beliebigen Richtung hin möglich war.

Zur Lösung der gestellten Aufgabe, ein beschädigungsfreies Einfahren eines Einzugsnippels in eine zentrale Aufnahmeöffnung in einem Schnellspannzylinder zu ermöglichen, dient auch die weitere technische Lehre, dass man im Bereich des Aufeinandertreffens von Einzugsnippel und Hubkolben die entsprechenden, aneinander anliegenden und einander zugeordneten Flächen von Verschmutzungen freihält.

Zu diesem Zweck sieht die Erfindung zunächst vor, dass im Hubkolben zugeordnete Blasöffnungen oder Kühlmittelöffnungen vorhanden sind, welche auf die zugeordneten Flächen des Einzugsnippels gerichtet sind. Mit diesen Maßnahmen ist es möglich, vor dem Auftreffen der einander zugeordneten Flächen (von Einzugsnippel und Hubkolben) diese vollkommen sauber und trocken zu machen, ohne dass die Gefahr besteht, dass dort Kühlmittel oder Späne eingeschlossen werden.

Bei der Reinigung mit Kühlmittel wird vorausgesetzt, dass dieses vollkommen spänefrei ist und entsprechend hochgefiltert ist, um den gewünschten Reinigungseffekt zu erzielen.

In einer Weiterbildung des Lösungsmerkmals zur Lösung dieser Aufgabe ist es vorgesehen, dass im Hubkolben ein drehend angetriebenes Turbinenrad angeordnet ist, welches von einem Pressluftstrom mit Luft versorgt wird. Sobald der Hubkolben aus der zentralen Aufnahmeöffnung im Schnellspannzylinder nach oben ausgefahren ist, kommt dieses Turbinenrad etwa in Gegenüberstellung zu der Deckelfläche des Schnellspannzylinders und der dann erzeugte hochturbulente Luftstrom bläst die gesamte Deckelfläche frei, wodurch ebenfalls die Aufgabe gelöst wird, ein beschädigungsfreies Einfahren des Einzugsnippels in die zentrale Ausnehmung am Schnellspannzylinder zu ermöglichen. Späne und Verschmutzungen können sich in diesem Bereich nicht mehr ablagern, was andernfalls zu einer Beschädigung des Einzugsnippels beim Einfahren in die zentrale Aufnahmeöffnung des Schnellspannzylinders geführt hätte.

Die Erfindung schlägt in einer anderen Ausführungsform auch vor, dass die Werkstückpalette nicht planeben mit ihrer Unterseite auf der zugeordneten Oberseite des Deckels des Schnellspannzylinders aufsitzt, sondern einen Zwischenraum ausbildet, der durch Auflagescheiben gebildet ist, die mittels Schrauben an der Unterseite der Werkstückpalette befestigt sind. Auf diese Weise wird ein Spalt zwischen der Unterseite der Werkstückpalette und der Oberseite des Deckels des Schnellspannzylinders gebildet, und dieser Spalt wird ebenfalls von Blasluft durchströmt, um so zu vermeiden, dass sich in diesem Bereich Späne festsetzen und ein zentriertes Aufsetzen der Werkstückpalette auf den Schnellspannzylinder verhindern.

Vorstehend wurden verschiedene Lösungsmöglichkeiten geschildert, wie man ein gesteuertes und beschädigungsfreies Einfahren eines Einzugsnippels - der an der Unterseite an der Werkstückpalette befestigt ist - in die zentrale Ausnehmung eines Schnellspannzylinders ermöglicht.

Neben einer horizontalen Anordnung von Schnellspannzylindern auf einem Montagetisch oder einer Aufspannplatte ist die Anordnung eines derartigen Schnellspannzylinders im Winkel von 90° in einem horizontalen Bearbeitungsturm möglich.

Während bei dem erstgenannten Ausführungsbeispiel die Mittenquerachse der Schnellspannzylinder vertikal gerichtet ist und senkrecht zu einer horizontalen Fläche eines Maschinentisches gerichtet ist, ist bei dem zweiten Ausführungsbeispiel die Mittenlängsachse durch den Schnellspannzylinder horizontal gerichtet und die Werkstückpaletten mit den daran angeordneten Einzugsnippeln werden in die horizontal ausgerichteten Schnellspannzylinder eingehängt, entlastet und dann eingezogen.

In einer anderen, erweiterten Ausführungsform nach diesem Lösungsvorschlag ist es vorgesehen, dass man schwere und große Werkstückpaletten sozusagen automatisch gesteuert und synchron in einer Reihe von parallel zueinander angeordneten Schnellspannzylindern einzieht. Zu diesem Zweck ist es vorgesehen, dass die einzelnen Hubkolben der Schnellspannzylinder synchron über mechanische Gestänge miteinander gekoppelt sind, so dass durch einen einzigen Antrieb dieses Gestänges alle Hubkolben synchron betrieben werden und somit eine synchrone Einzugsbewegung erfolgt.

Hierbei gibt es für den synchronen Verschiebeantrieb der einzelnen Hubkolben in den einzelnen Schnellspannzylindern unterschiedliche Lösungsvorschläge.

In einem ersten Lösungsvorschlag wird vorgeschlagen, dass jeder Hubkolben mit einem Kniehebelgestänge verbunden ist und dass alle Kniehebelgestänge mit einer doppelwirkenden Kolbenanordnung gekoppelt sind, so dass mit der Beaufschlagung eines einzigen Antriebszylinders alle Kniehebel entsprechend angesteuert werden.

Hierbei ist wichtig, dass die hydraulische Ansteuerung des doppelwirkenden Zylinders durch die Maschinensteuerung selbst erfolgt, dass heißt, die Druckölzuführung zu diesem Antriebszylinder erfolgt entsprechend gesteuert in Abhängigkeit zu der Druckölzuführung zu den einzelnen Schnellspannzylindern, so dass ein gesteuerter Verfahrensablauf gewährleistet ist.

Statt der Anordnung eines hydraulisch beaufschlagten Antriebszylinders für den Verschiebeantrieb der Hubkolben ist es selbstverständlich auch möglich, einen pneumatischen Antrieb zu nehmen oder einen Handantrieb, wobei statt des Antriebes mit einem doppelwirkenden Hydraulikkolben auch eine Zahnstange verwendet werden kann.

Bei leichteren Zentrierungsaufgaben muss nicht unbedingt ein synchroner Antrieb für alle Hubkolben in den Schnellspannzylindern vorgesehen werden. Es kann auch eine passive Anordnung vorgesehen werden, was bedeutet, dass die Hubkolben in den Schnellspannzylindern von Hand hin und her bewegt werden können, und zwar über die Bewegung an der Werkstückpalette selbst. Die Werkstückpalette kann deshalb an den Hubkolben eingehängt werden, und per Hand wird dann die Werkstückpalette in die zentrale Aufnahmeöffnung angeordnet, wobei die einzelnen Hubkolben synchron durch die Bewegung der Werkstückpalette passiv in den Innenraum der Schnellspannzylinder verschoben werden.

Der gleiche Vorgang erfolgt natürlich auch in entgegengesetzter Weise, wenn die Werkstückpalette von den Schnellspannzylindern abgekoppelt wird. Auch in diesem Fall wird die Werkstückpalette - bei entriegelten Schnellspannzylindem - einfach von den Schnellspannzylindern abgedrückt und die hubkolben folgen passiv dieser Auszugsbewegung, solange bis die Einzugsnippel ausgehängt werden können.

In einer weiteren Ausgestaltung der Erfindung wird der Lösungsgedanken nach den vorher genannten Ausführungsbeispielen dergestalt verallgemeinert, dass es nun nicht mehr notwendig ist, Hubkolben verschiebbar in einem Schnellspannzylinder anzuordnen.

In dieser Verallgemeinerung ist es vorgesehen, dass der Hubkolben durch ein allgemeines Maschinenteil, insbesondere durch eine Maschinenwelle, ersetzt wird, die verschiebbar im Innenraum eines Schnellspannzylinders gehalten ist. In diesem Ausführungsbeispiel können an der Maschinenwelle mehrere, im axialen Abstand voneinander angeordnete Verriegelungsnuten angeordnet werden, welche mit der Verriegelungseinrichtung im Schnellspannzylinder zusammen wirken. Auf diese Weise ist es erstmals möglich, dass man eine genau positionierte Verschiebung und eine dementsprechend hochgenaue Verriegelung einer Maschinenwelle in einem Schnellspannzylinder verwirklicht, weil beim Eingriff der Verriegelungseinrichtung in die maschinenwellenseitigen Verriegelungsnut diese Maschinenwelle einwandfrei festgelegt und hochgenau positioniert wird.

Die Maschinenwelle wird daher mit sehr hoher Haltekraft im Schnellspannzylinder festgehalten und kann für verschiedene Maschinenaufgaben verwendet werden. Beispielsweise kann die Maschinenwelle Teil eines Verschiebegestänges oder Teil einer Schließeinheit oder Teil eines Hydraulikkolbens sein , bei dem es darauf ankommt, diesen Hydraulikkolben in einer bestimmten axialen Verschiebestellung hochgenau zu arretieren.

In einer Weiterbildung dieser verallgemeinernden Idee ist es vorgesehen, dass an der Maschinenwelle im gegenseitigen Abstand zwei einander entgegengesetzte Schnellspannzylinder einwirken, deren Einzugskraft jeweils entgegengesetzt gerichtet ist. Die Einzugskraft des einen Schnellspannzylinders an der einen Verriegelungsnut der Maschinenwelle wirkt, der Einzugskraft des gegenüberliegenden Schnellspannzylinders entgegen. Damit wird die Maschinenwelle in zwei einander entgegengesetzte Richtungen zwischen zwei entgegengesetzt vorgespannten Schnellspannzylindern positioniert und kann hohe Verschiebungskräfte aushalten, ohne dass es zu einem unerwünschten Lösen der Arretierungseinrichtung kommt.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.
Im Folgenden wird die Erfindung anhand von mehreren Ausführungswegen darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schnitt durch eine erste Ausführungsform einer Einzugsvorrichtung mit vergrößertem Fangweg;
- Figur 2:: eine gegenüber Figur 1 abgewandelte Ausführungsform mit zusätzlichem Hubkolben;
- Figur 3:: eine gegenüber Figur 2 abgewandelte Ausführungsform mit einem mit Blasluft versorgtem Hubkolben und Turbinenrad;
- Figur 4:: die Draufsicht auf das Turbinenrad;
- Figur 5:: die Anordnung nach Figur 3 im ausgefahrenen Zustand;
- Figur 6:: eine gegenüber Figur 3 und 5 vereinfachte Ausführungsform mit Sperrluftüberwachung im verriegelten Zustand;
- Figur 7:: die Anordnung nach Figur 6 im entriegelten Zustand;
- Figur 8:: eine Ausführungsform eines Schnelispannzylinders für Vertikalmaschinen in einer um 90° gedrehten Zeichnungslage;
- Figur 9:: die Darstellung nach Figur 8 eines ausgefahrenen Hubkolbens;
- Figur 10:: die Ausführung nach Figur 8 einer entkoppelten Werkstückpalette;
- Figur 11:: der synchrone Antrieb von Hubkolben über ein hydraulisch angetriebenes Knickgestänge;
- Figur 12:: eine vergrößerte Ansicht der Darstellung nach Figur 11;
- Figur 13:: ein gegenüber Figur 11 abgewandeltes Ausführungsbeispiel mit einem Handantrieb für die Hubkolbenbewegung;
- Figur 14:: die Stirnansicht auf die Anordnung nach Figur 13;
- Figur 15:: ein Schnitt in Seitenansicht durch einen Schnellspannzylinder mit passiv verschiebbaren Hubkolben;
- Figur 16: Draufsicht auf die Stirnseite der Anordnung nach Figur 15
- Figur 17:: die Darstellung nach Figur 15 im eingefahrenen Zustand der Hubkolben;

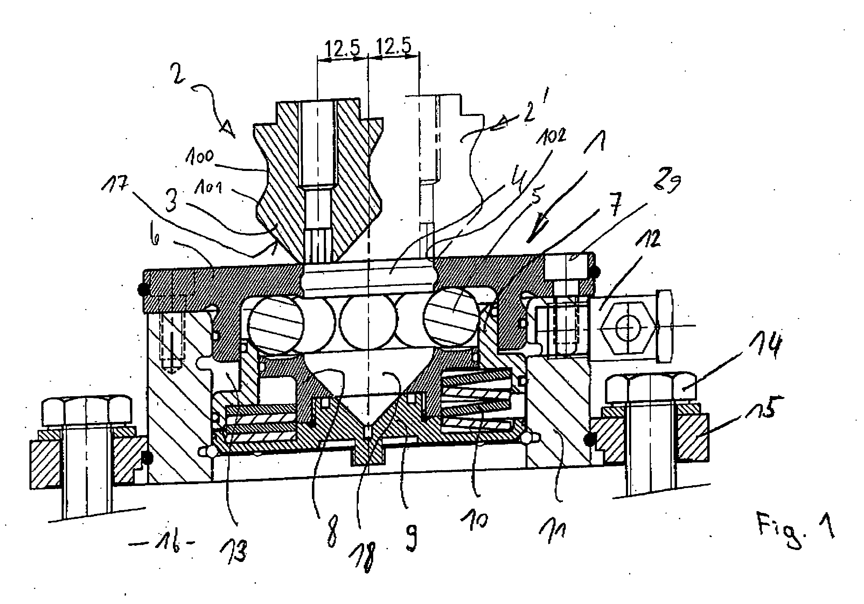

In Figur 1 ist allgemein ein Schnellspannzylinder 1 dargestellt, der in mehreren Anmeldungen des gleichen Anmelders eingehend beschrieben ist.

Der Schnellspannzylinder 1 besteht im Wesentlichen aus einem Deckel 6, der auf einem rohrförmigen Gehäuse 11 aufgesetzt und mittels Schrauben 29 festgelegt ist.

Im Deckel 6 ist eine zentrale Aufnahmeöffnung 4 angeordnet, in welche gesteuert und möglichst beschädigungsfrei ein Einzugsnippel 2 eingefahren werden soll.

Im Innenraum des Schnellspannzylinders 1 ist eine Verriegelungseinrichtung angeordnet, die im wesentlichen aus gleichmäßig am Umfang verteilt angeordneten, käfiglos geführten Verriegelungskugeln 5 besteht, die gleichmäßig verteilt auf horizontalen Kugelauflageflächen eines Kugelauflagers 8 in radialer Richtung verschiebbar angeordnet sind.

Der Verschiebungsantrieb der Kugeln in Verriegelungsrichtung erfolgt hierbei durch eine Reihe von im gegenseitigen Abstand zueinander angeordneten Federn 10, die im Zwischenraum zwischen dem Kugelauflager 8 und einer unteren Federauflage 9 angeordnet sind. Die Federn 10 wirken auf einen ringförmigen, abgekröpften Kolben 7, der hydraulisch in seine Lösestellung und durch die Federkraft der Federn 10 in seine Verriegelungsstellung bringbar ist.

Im rechten Halbschnitt nach Figur 1 ist die Verriegelungsstellung dargestellt, während im linken Halbschnitt die Lösestellung des Schnellspannzylinders 1 dargestellt ist.

Über eine Druckmittelzufuhr 12 wird das Druckmittel in einen Druckraum 13 eingeführt und fährt den Kolben 7 gemäß dem Halbschnitt auf der linken Seite nach unten, wodurch die Verriegelungskugeln 5 frei werden und außer Eingriff mit einer zugeordneten Verriegelungsnut 100 gelangen. Dort verriegeln die Kugeln 5 im Übrigen im Bereich einer schräg abwärts gerichteten Schräge 101.

Vollständigkeitshalber sei noch erwähnt, dass das Gehäuse 11 mittels Spannpratzen 15 und zugeordneten Schrauben 14 auf einen nicht näher dargestellten, horizontal liegenden Maschinentisch 16 festgelegt ist.

Um nun den Einzugsnippel 2 möglichst beschädigungsfrei in die zentrale Aufnahmeöffnung 4 des Schnellspannzylinders 1 einzufahren, ist erfindungsgemäß vorgesehen, dass der Einzugsnippel 2 eine Fangspitze 3 aufweist, die bevorzugt mit Konusschrägen 17 ausgebildet ist. Aufgrund der Anordnung dieser Konusschrägen 17 an der Fangspitze 3 ist es nun möglich, den Einzugsnippel 2 insgesamt über einen Verschiebungsweg von 12,5 mm versetzt zu der Aufnahmeöffnung 4 an diese Aufnahmeöffnung 4 heranzufahren und dennoch in die Aufnahmeöffnung 4 zu treffen. Zu diesem Zweck ist am Innenumfang der Aufnahmeöffnung ein Einlaufradius 102 angeordnet, der mit der Konusschräge 17 der Fangspitze 3 zusammenwirkt.

Wichtig bei dem Ausführungsbeispiel nach Figur 1 ist auch, dass auch der zentrale Innenraum im Gehäuse des Schnellspannzylinders, nämlich insbesondere das obere Kugelauflager 8 und die untere Federauflage 9 gleichfalls eine Konusaufnahme 18 bilden, so dass in der Verriegelungsstellung die Fangspitze 3 im Bereich dieser Konusaufnahme 18 eingreift, jedoch dort freigestellt ist.

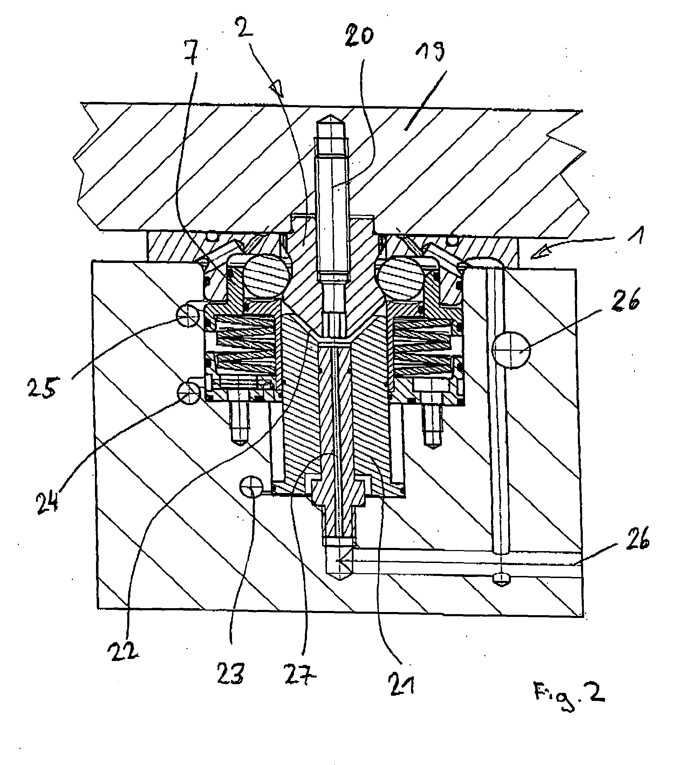

Die Figur 2 zeigt ein gegenüber Figur 1 abgewandeltes Ausführungsbeispiel, wo im zentralen Innenraum des Schnellspannzylinders nicht eine Konusschräge im Bereich der Teile 8, 9 angeordnet ist, sondern ein verschiebbar angetriebener Hubkolben 21, der an seiner oberen Stirnseite nun ebenfalls eine zugeordnete Konusausnehmung 22 aufweist.

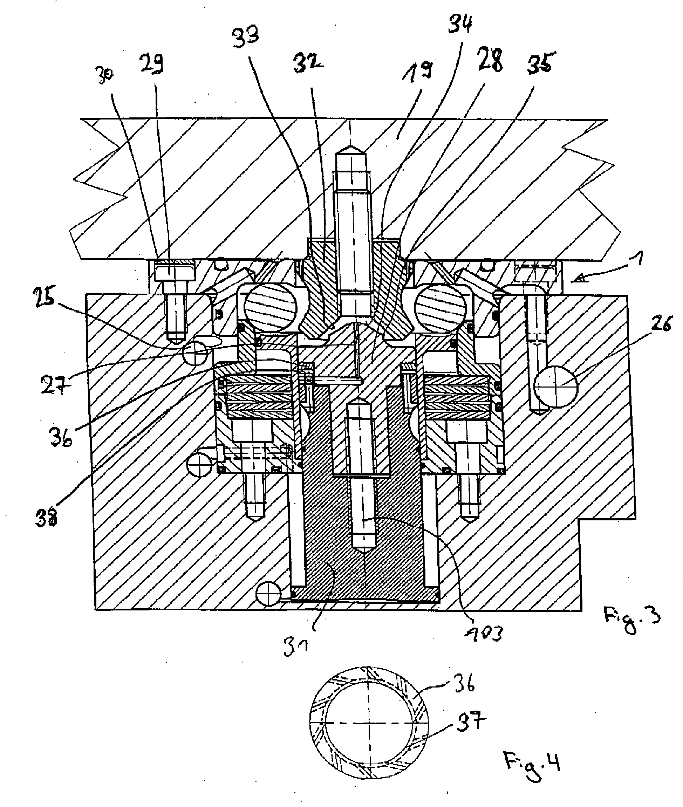

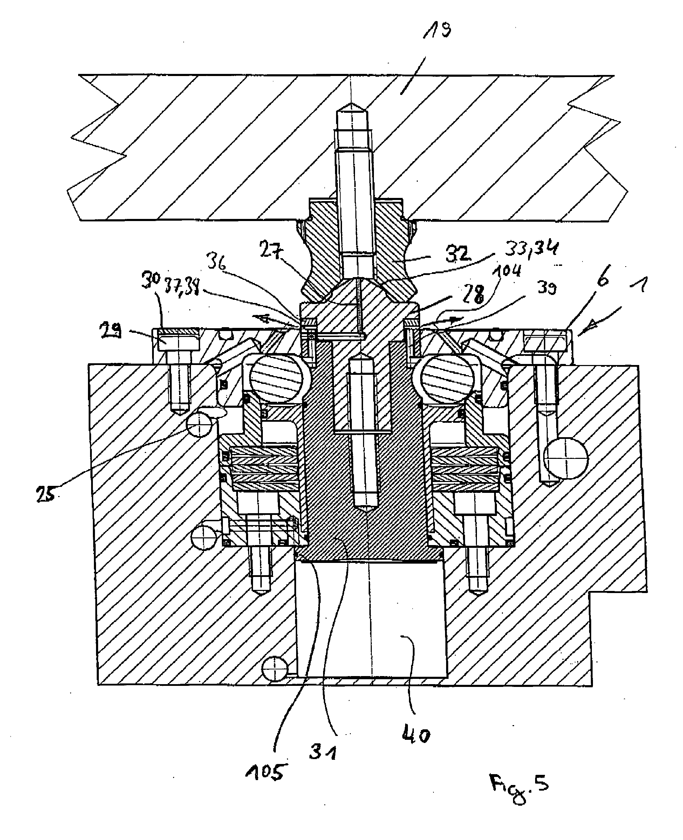

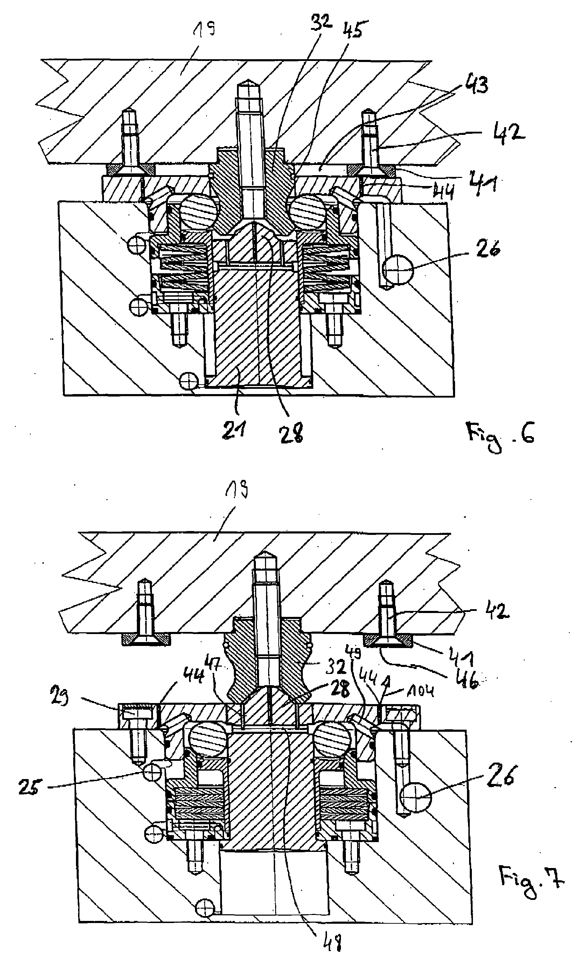

Dieser Hubkolben 21 fährt in der Einzugsstellung nach oben aus dem Deckel 2 heraus, und die Konusausnehmung 22 ist dann nach oben gerichtet, wie dies beispielsweise anhand des Ausführungsbeispieles nach Figur 5 näher beschrieben werden wird.

Bei dem Ausführungsbeispiel nach Figur 2 ist wichtig, dass über den Anschluss 26 für Blasluft entsprechende Blasluftkanäle im Innenraum des Schnellspannzylinders 1 versorgt werden, so dass an verschiedenartigen Stellen die Blasluft aus dem Deckel 6 entweicht.

Gleichfalls wird die Blasluft auch durch den Innenraum des Hubkolbens 21 hindurchgeführt und gelangt über einen Steigkanal 27 in den Bereich der Konusausnehmung 22, die demzufolge ebenfalls von Verschmutzungen, insbesondere von Spänen, freigehalten wird.

Über den Anschluss 25 wird ein Druckmedium eingeführt, und der Kolben 7 wird in seine Entriegelungsstellung nach unten gefahren.

Über dem Anschluss 24 erfolgt die Druckmittelzufuhr für den Verschiebeantrieb des Hubkolbens 21 im Sinne einer Senkbewegung, während, wenn Druckmedium über den Anschluss 23 eingeführt wird, der Hubkolben 21 vertikal nach oben aus der zentralen Innenausnehmung des Schnellspannzylinders 1 herausgefahren wird.

Der Vorteil einer Konusausnehmung 22 in der oberen Stirnseite des Hubkolbens 21 besteht darin, dass der Einzugsnippel 2 zuverlässig mit seiner Konusspitze in der Konusausnehmung 22 über einen sehr weiten Verschiebungsweg eingefangen wird und zuverlässig in den Mittenbereich geführt und dort zentriert wird. Damit wird gesorgt, dass, wenn der Hubkolben 21 in die zentrale Mittenausnehmung eingefahren wird, die Fangspitze 3 zuverlässig zentriert in der Konusausnehmung 22 liegt und damit verhindert wird, dass irgendwelche Umfangsteile des Einzugsnippels 2 an dem Außenumfang der zentralen Aufnahmeöffnung anschlagen.

Der Vollständigkeit halber zeigt die Figur 2, dass der Einzugsnippel 2 mittels einer Stiftschraube 20 an der Unterseite einer Werkstückpalette 19 befestigt ist.

Die Figuren 3, 4 und 5 zeigen als weiteres Ausführungsbeispiel, dass der Hubkolben 31 auch mehrteilig ausgebildet sein kann. Im gezeigten Ausführungsbeispiel besteht der obere Teil des Hubkolbens 31 aus einem Verschleißeinsatz 28, der fest über eine entsprechende Schraube mit dem übrigen Teil des Hubkolbens 31 verbunden ist. Vorteil der zweiteiligen Ausbildung des Hubkolbens 31 ist, dass der Verschleißeinsatz 28 leicht auswechselbar ist und bei entsprechender Beschädigung schnell ersetzt werden kann. Er kann deshalb aus einem Hartmaterial hergestellt werden, um mit dem entsprechenden harten Material des Einzugsnippels 32 gepaart zu sein.

Hierbei muss das Material des Einzugsnippels 32 im Vergleich zu dem Material des Verschleißeinsatzes 28 so gewählt werden, dass der Einzugsnippel 32 nicht beschädigt wird, aber der Verschleißeinsatz 28 möglicherweise einer Beschädigung unterliegt und dann schnell auswechselbar ist.

Das schnelle Auswechseln des Verschleißeinsatzes 28 erfolgt einfach dadurch, dass er aus seiner Befestigung mit der Stiftschraube 103 herausgedreht wird.

Bei dem Ausführungsbeispiel nach Figuren 3, 4 und 5 ist noch wesentlich, dass im Hubkolben 31 ein drehend angetriebenes Turbinenrad 36 angeordnet ist. Übern den Luftanschluss 26 wird Pressluft eingeblasen, die im ausgefahrenen Zustand des Hubkolbens (siehe Figur 5) das Turbinenrad schnelldrehend antreibt. Das Turbinenrad besteht gemäß Figur 4 aus einem in einer Ringausnehmung drehend gelagerten Teil, welches gemäß Figur 4 schräg auswärtsgerichtete Schrägbohrungen 37 oder Nuten aufweist, wobei dadurch nach unten gerichtete Turbinenflügel 38 gebildet werden, die von der Blasluft über den Anschluss 26 mit Luft versorgt werden. Gleichfalls ist eine Versorgung mit Kühlmittel über den Anschluss 26 möglich. Sobald also der Hubkolben 31 in seine Stellung nach Figur 5 über die Oberfläche des Deckels herausgefahren wird, gelangt die Blasluft über die radial auswärts gerichteten Bohrungen in Pfeilrichtung 104 nach außen, und damit wird die Oberfläche des Deckels 6 abgereinigt und von Verschmutzungen und Spänen befreit.

Gleichzeitig gelangt auch die Blasluft über den vorher erwähnten Steigkanal 27 in den Zwischenraum zwischen dem Einzugsnippel 32 und der zugeordneten Fläche an dem Verschleißeinsatz 28, so dass auch diese Fläche von Verschmutzungen freigehalten wird.

Im Übrigen sieht die Figur 5 eine Blasluftversorgung des Turbinenrades 36 über den Luftkanal 39 nur dann vor, wenn die Verschleißspitze 28 in der herausgefahrenen Stellung nach Figur 5 sich befindet. Im übrigen Fall - siehe Figur 3 - ist eine Abdichtung gegeben, so dass in diesem Fall das Turbinenrad 36 nicht mit Luft versorgt wird. Es wird also erst eine luftschlüssige Verbindung zum Turbinenrad 36 über den Luftkanal 39 hergestellt, wenn das Turbinenrad sich etwa leicht erhöht über der Oberfläche 6 befindet. Gleichzeitig liegt dann der Hubkolben 31 mit einem Ansatz 105 vergrößerten Durchmessers an einer zugeordneten Anschlagfläche an der Bodenseite des Schnellspannzylinders 1 an.

Damit ist eine einwandfreie Zentrierung zwischen dem Einzugsnippel 32 und dem Verschleißeinsatz 28 gewährleistet, weil alle verschmutzungsanfälligen Flächen durch Blasluft und/oder Kühlmittel abgereinigt werden.

Zusätzlich ist noch gezeigt, dass auch die deckeseitigen Schrauben 29 durch obere Abdeckbleche 30 abgedeckt sind, um auch diesen Bereich von Verschmutzungen freizuhalten.

Es ist natürlich ebenso möglich, statt der Abdeckbleche 30 entsprechende Klebstoffabdeckungen zu gestalten.

Nachdem der Hubkolben 31 nach den Figuren 3 bis 5 einen Verschleißeinsatz 28 trägt, wird er mit dem Bezugszeichen 31 versehen, während der Hubkolben 21 nach Figur 2 ohne Verschleißeinsatz mit dem Bezugszeichen 21 versehen ist.

Zur weiteren Freihaltung von Verschmutzungen an den einander zugeordneten Flächen zwischen Einzugsnippel 32 und dem Verschleißeinsatz 28 des Hubkolbens 31 ist es vorgesehen, dass im Bereich der Konusspitze 34 des Hubkolbens 31 ein ringförmig umlaufender, nasenförmiger Ansatz 35 vorgesehen ist. Der - im Querschnitt - nasenförmige Ansatz 35 legt sich an der zugeordneten Konusschräge im Bereich der Konusausnehmung 33 am Einzugsnippel 32 an und reibt diese Konusausnehmung 33 auf, wenn die beiden Teile einander anliegen.

Sollten sich in diesem Bereich Späne bilden, dann werden diese Späne durch diesen nasenförmigen Ansatz 35 zerhackt, zerkleinert und durch die nachfolgende Blasluftreinigung auch zuverlässig entfernt.

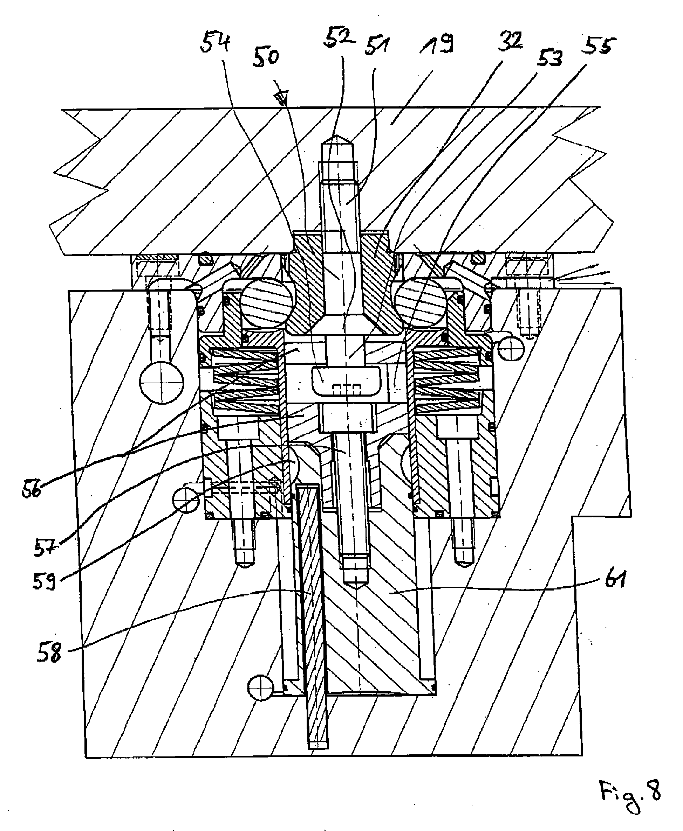

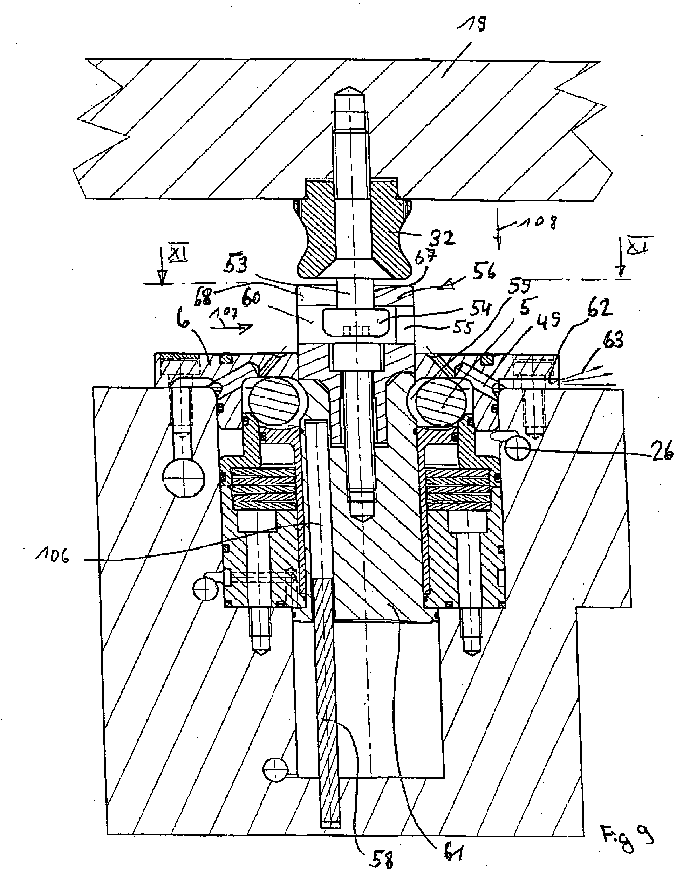

Die Figur 5 zeigt, dass der Hubkolben 31 in der zentralen Ausnehmung 40 des Schnellspannzylinders 1 verschiebbar angetrieben ist. Die Figuren 6 und 7 zeigen gegenüber dem vorher erwähnten Ausführungsbeispiel nach den Figuren 3 bis 5 eine vereinfachte Ausführungsform, weil dort das Turbinenrad 36 entfällt. Jedoch zeigt diese Ausführungsform, dass auch die Unterseite der Werkstückpalette 19 von Verschmutzungen freigehalten wird, weil vorgesehen ist, dass die Unterseite nicht planeben auf der Oberfläche des Deckels 6 aufliegt, sondern ein Abstand 43 zwischen beiden Teilen gebildet ist. Dieser Abstand wird durch gehärtete Auflagescheiben 41 hergestellt, die mittels Schrauben 42 an der Unterseite der Werkstückpalette 19 angeschraubt sind. Es ergibt sich damit im Bereich des Abstandes 43 ein luftführender Raum, der von Blasluft oder Kühlmittel durchströmt ist und der dementsprechend von Verschmutzungen freigehalten werden kann.

Um zu vermeiden, dass im Bereich der Auflagescheiben 41 sich Verschmutzungen festsetzen, ist es vorgesehen, dass im Deckel nach oben gerichtete Steigbohrungen 44 vorgesehen sind, die Blasluft an die Unterseite der Auflagescheiben 41 heranführen, bevor diese gemäß Figur 7 auf den Deckel aufgesetzt werden. Dies illustriert die Figur 7, wo erkennbar ist, dass aus den Steigbohrungen 44 Blasluft in Pfeilrichtung 104 nach oben gegen die Unterseite der Auflagescheiben 41 gerichtet ist.

Gleichzeitig zeigt auch die Figur 6 und 7, dass die einander zugeordneten Konusflächen zwischen Einzugsnippel 32 und Verschleißeinsatz 28 von Blasluft gespült werden, wie dies anhand der vorherigen Ausführungsbeispiele dargestellte wurde. Zu diesem Zweck ist vor allem ein Ringspalt 47 im Bereich des Verschleißeinsatzes 28 vorhanden, durch den die Blasluft über eine darunter angeordnete Querbohrung 48 herangeführt wird.

Die Figur 7 zeigt im Übrigen, dass die Senkschrauben 42 an den Auflagescheiben 41 noch kopfseitig einen Freiraum 46 bilden, der eine Vertiefung ausbildet, die dann ebenfalls von der Blasluft in Pfeilrichtung 104 ausgespült wird.

Gleichzeitig zeigt die Figur 6, dass am Außenumfang des Einzugsnippels 32 ein Abdichtring 45 angeordnet ist, der eine Leckarge in diesem Bereich vermeidet.
Im Abstand 43 soll nämlich ein Luftraum mit bestimmtem Luftüberdruck aufrecht erhalten werden, was für die nachfolgend zu beschreibende Sperrluftüberwachung dient.

Die Sperrluftüberwachung dient zur Auflagekontrolle, nämlich zur Kontrolle, ob die Werkstückpalette 19 planeben und unverkantet mit den Auflagescheiben 41 auf der Oberseite des Deckels 6 aufgesetzt ist und keinerlei Verschmutzungen trägt. Zu diesem Zweck zeigt die Figur 6, dass die Steigbohrungen 44 gegen die Unterseite der Auflagescheiben 41 gerichtet sind. Sobald die Werkstückpalette 19 planeben und verschmutzungsfrei auf der Oberseite des Schnellspannzylinders 1 aufgesetzt ist, werden somit die Steigbohrungen 44 abgedichtet, und es entsteht damit ein Luftüberdruck im Bereich der Luftversorgung an den Steigbohrungen 44. Dieser Luftüberdruck wird zur Überwachung der planebenen Auflage der Werkstückpalette 19 verwendet.

Es versteht sich von selbst, dass die Luft von dem Anschluss 26 über entsprechende Querbohrungen 49 in den Innenraum des Schnellspannzylinders 1 geleitet wird, und nicht nur zur Reinigung der entsprechenden Flächen des Hubkolbens 21 dient, sondern noch zusätzliche weitere Ausblasöffnungen im Bereich des Deckels 6 des Schnellspannzylinders 1 mit Blasluft versorgt.

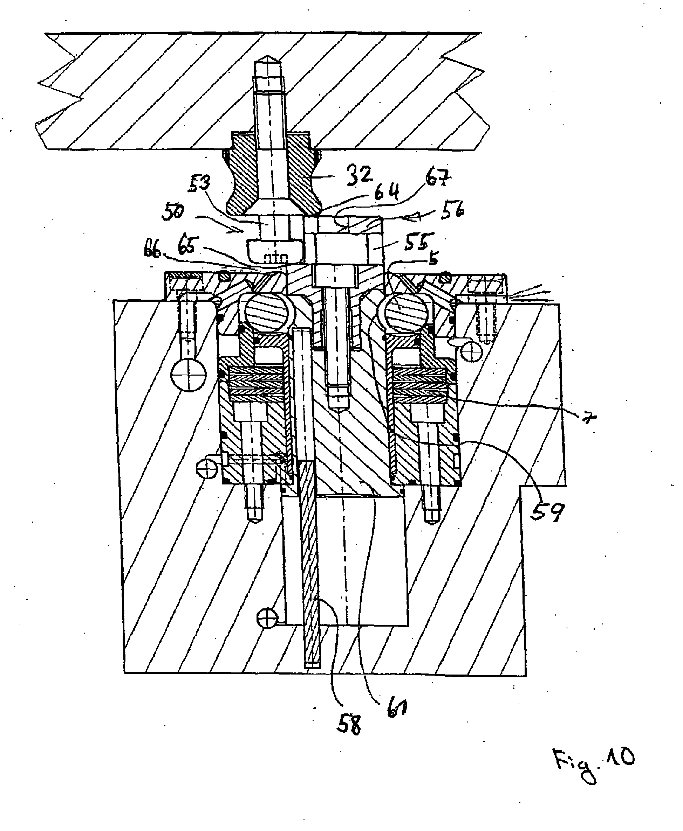

Die Figuren 8, 9 und 10 zeigen nun einen Schnellspannzylinder 1 für eine Werkstückpalette in Verbindung mit einem Hubkolben 61. Dieses Ausführungsbeispiel ist insbesondere für eine horizontale Montage der Schnellspannzylinder 1 geeignet. Ebenso können die Schnellspannzylinder in einer beliebigen Schräge oder in einer Überkopflage angeordnet werden, und es ist stets sichergestellt, dass die Werkstückpalette mit den daran angeordneten Einzugsnippeln 32 beschädigungsfrei an den Hubkolben eingehängt und dann danach eingezogen werden kann.

Der besseren zeichnerischen Verdeutlichung sind diese Einrichtungen in vertikaler Ausrichtung dargestellt. In der wahren Einbausituation ist jedoch die zeichnerische Darstellung um einen Winkel von 90° gedreht vorzustellen, oder es ist eine hängende oder sogar eine nach unten gerichtete Einbausituation gegeben.

Selbstverständlich ist der gezeigte Einzugsnippel 32 nicht auf die gezeigte Ausführungsform beschränkt. Es kann auch ein Einzugsnippel 2 nach den vorher beschriebenen Ausführungsformen verwendet werden.

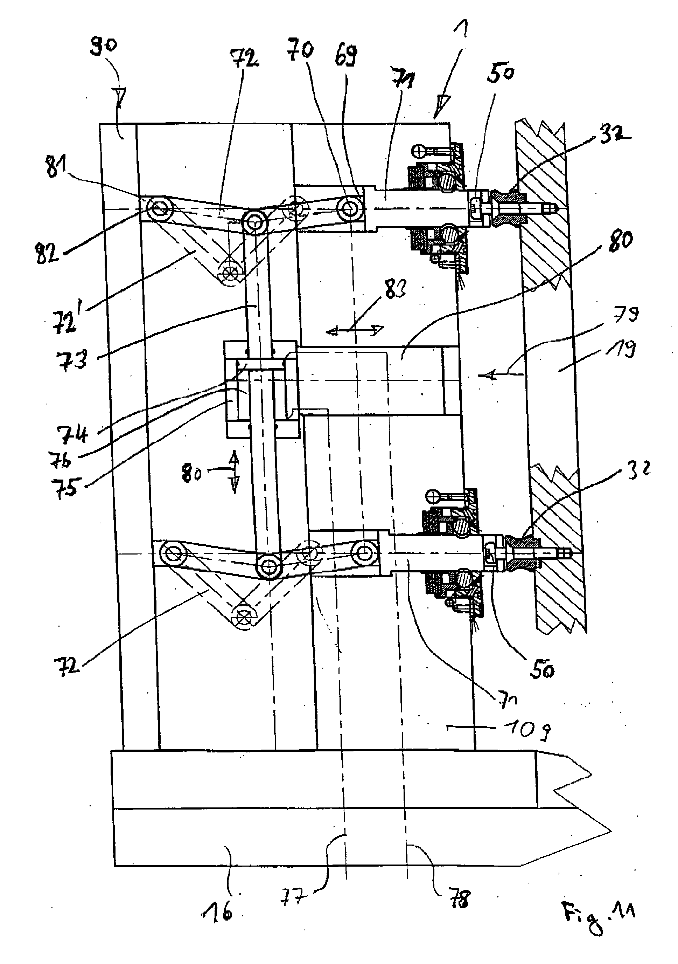

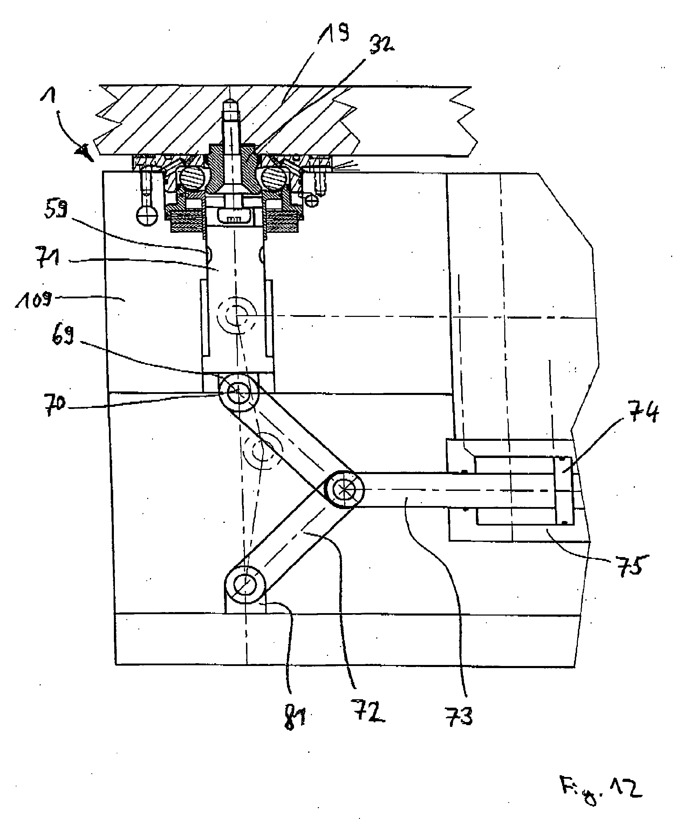

Die Figur 8 zeigt die Schnellspannvorrichtung im Eingriff, während die Figur 9 einen gekuppelten Zustand und die Figur 10 einen entkuppelten Zustand einer Schnellspannvorrichtung darstellt.

Im eingefahrenen Zustand wird somit der Einzugsnippel 32 von dem Hubkolben 61 in den Innenraum des Schnellspannzylinders 1 eingefahren und dort festgehalten. Zu diesem Zweck weist der Hubkolben 61 eine Verdrehsicherung aus, die im Wesentlichen aus einem Verdrehsicherungsstift 58 besteht, der in eine entsprechende, in Längsrichtung weisende Bohrung 106 im Hubkolben 61 eingreift. An der Oberseite des Hubkolbens 61 ist ein Fangteil 56 mittels einer Schraube 57 befestigt, wobei dieses Fangteil eine seitliche Fangöffnung 60 ausbildet, die eine Art einer schlüssellochförmigen Öffnung definiert, die seitlich eine Öffnung 55 aufweist, über welche eventuell in die Fangöffnung 60 eintretender Schmutz oder Wasser entfernt werden kann.

Die Figur 8 zeigt im Übrigen, dass noch am Außenumfang des Hubkolbens 61 mindestens eine Verriegelungsnut 59 angeordnet ist, so dass der Hubkolben auch mit der Verriegelungseinrichtung des Schnellspannzylinders 1 zusammenwirken kann.

Dieses Stadium ist in Figur 9 und 10 dargestellt.

Figur 9 zeigt die entriegelte Lage, wenn die Verriegelungskugeln 5 außer Eingriff mit der Verriegelungsnut 59 des Hubkolbens 61 sind.

In Figur 9 ist die eingehängte Lage zwischen dem Einzugsnippel 32 und dem Fangteil 56 dargestellt. In dieser Stellung nach Figur 9 werden die Verriegelungskugeln 5 im Verriegelungseingriff mit der Verriegelungsnut 59 gebracht, um ein ungestörtes Aufnehmen der Einrichtung zu gewährleisten.

Nachdem die Aufnahmestellung nach Figur 9 erreicht wurde, ist es nun möglich, die Werkstückpalette 19 in Pfeilrichtung 108 nach unten zu fahren, wobei der Hubkolben 61 die Einzugsbewegung vollzieht und bei einer horizontalen Lage (senkrecht zur Zeichnungslage nach Figur 9) läuft nun Schmutz und Wasser aus der nach unten gerichteten Öffnung 55 in den Innenraum des Schnellspannzylinders ein und die über den Anschluss 26 eingeblasene Blasluft gelangt über die Schrägbohrung 49 in einen Schmutzauslauf 62, wo die Verschmutzungen in Pfeilrichtung 63 entfernt werden.
Es kommt also zu einem automatischen Reinigungsvorgang beim Ausfahren des Hubkolbens 61 aus der zentralen Ausnehmung im Schnellspannzylinder, wenn dieser seine Stellung in Figur 9 erreicht hat.

Bei waagerecht auf dem Maschinentisch angeordneten Schnellspannzylindern nach den Figuren 1 bis 7 ist dies kein Problem, während bei den Figuren 8 bis 10 bei horizontal liegenden Spannzylindern für die genannten Schmutzentfemungsmaßnahmen gesorgt werden muss.

Die Figur 10 zeigt, dass bei Absenken des Einzugsnippels 32 - insbesondere wenn eine Werkstückpalette 19 mit hohem Gewicht mit einem Kran abgelassen wird - dass nicht die Fangschraube 50 auf der Oberfläche des Deckels 6 aufsitzt und diesen beschädigt. Zu diesem Zweck ist vorgesehen, dass der Einzugsnippel eine untere Anschlagfläche 64 aufweist, die auf der Oberseite des Fangteiles 56 aufliegt. In diesem Anlagefall hat die Unterseite der Fangschraube 50 noch einen Abstand 66 zu der Oberseite des Deckels, weil die zugeordnete Anschlagfläche 65 nicht auf der Oberseite des Deckels 6 aufliegt.

Im eingekuppelten Zustand (siehe Figur 9) sitzt dann der Aufhängehals 53 seitlich an einer zugeordneten Anschlagfläche 67 im Fangteil 56 an.

Die Figur 9 zeigt hier weitere Einzelheiten.

Diese zeigt die vorher erwähnten, schräg verlaufenden Querbohrungen 49, welche Luft führen und diese Luft auch zu den Schrauben 29 heranführen.

Gleichzeitig zeigt die Figur 9 auch noch die Funktion des Schmutzauslaufes 62, über den das Schmutzwasser in Pfeilrichtung 63 entfernt wird.

In den Zeichnungsfiguren 11 bis 13 sind eine Reihe von parallel zueinander angeordneten und horizontal gerichteten Hubkolben 71 dargestellt, wobei an jedem Hubkolben eine Lasche 69 befestigt ist, die einen Schwenkbolzen 70 trägt, der in Verbindung mit dem einen Ende eines Kniehebels 72 ist. Das andere Ende des Kniehebels 72 ist in einem Schwenklager 82 und einer Anschraublasche 81 an dem vertikalen Teil eines Horizontalturms 90 befestigt. Der Horizontalturm 90 ist hierbei auf einem Maschinentisch 16 angeordnet.

Die Anzahl der Hubkolben 71 in Verbindung mit der Anzahl der Schnellspannzylinder 1 in vertikaler Richtung übereinander oder in horizontaler Richtung nebeneinander ist beliebig. Es können beliebig viele Verschiebeantriebe mit dem nachfolgend zu beschreibenden Gestänge mit den Kniehebeln 72 verwirklicht werden.
Am schwenkbaren Teil jedes Kniehebels setzt über einen entsprechenden Schwenkbolzen die Kolbenstange 73 eines Zylinders 75 an, der mit einem doppelwirkenden Kolben 74 in einem Zylinderraum 76 von einem Drucköl angetrieben ist. Das Drucköl wird über die Ölzufuhr 77 im Sinne einer Ausstoßbewegung und über die Ölzufuhr 78 im Sinne einer Einzugsbewegung versorgt.

Selbstverständlich ist es möglich, den Kolben 74 nicht doppelwirkend auszubilden, sondern nur einfach wirkend und den Rückhub beispielsweise durch eine Feder zu bewerkstelligen.

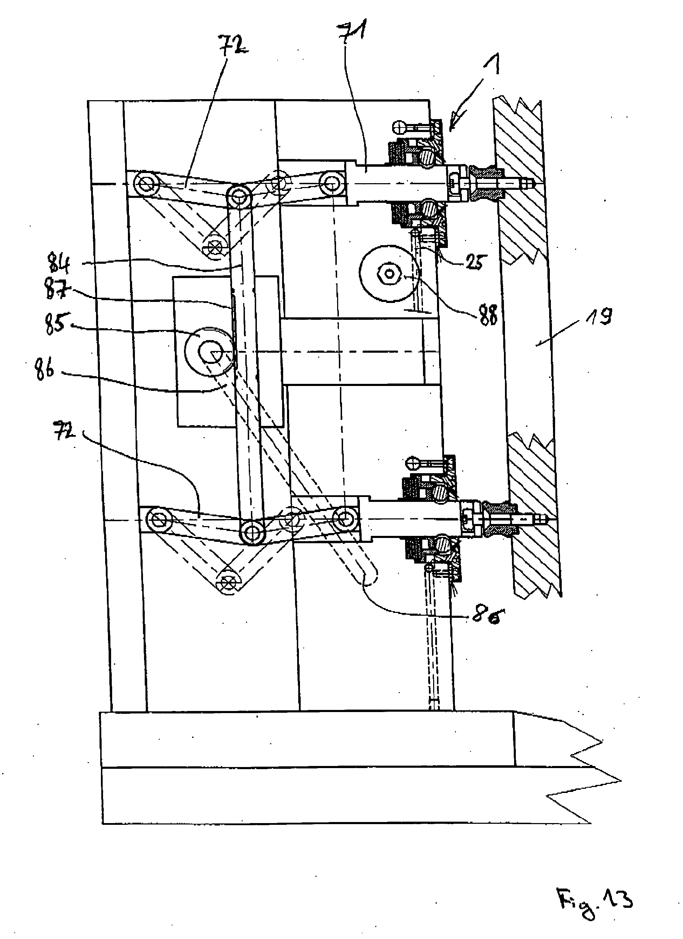

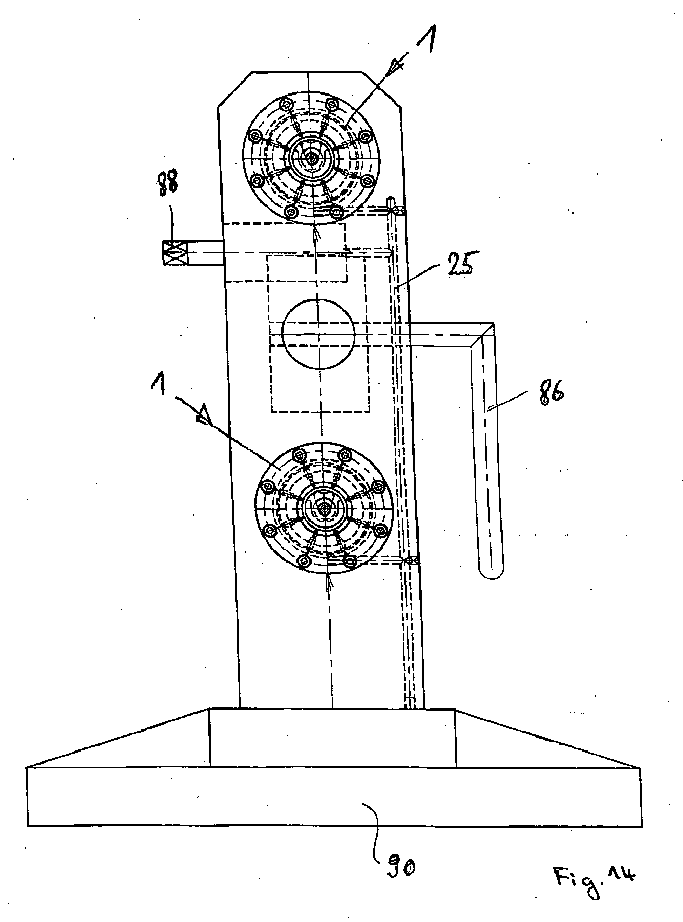

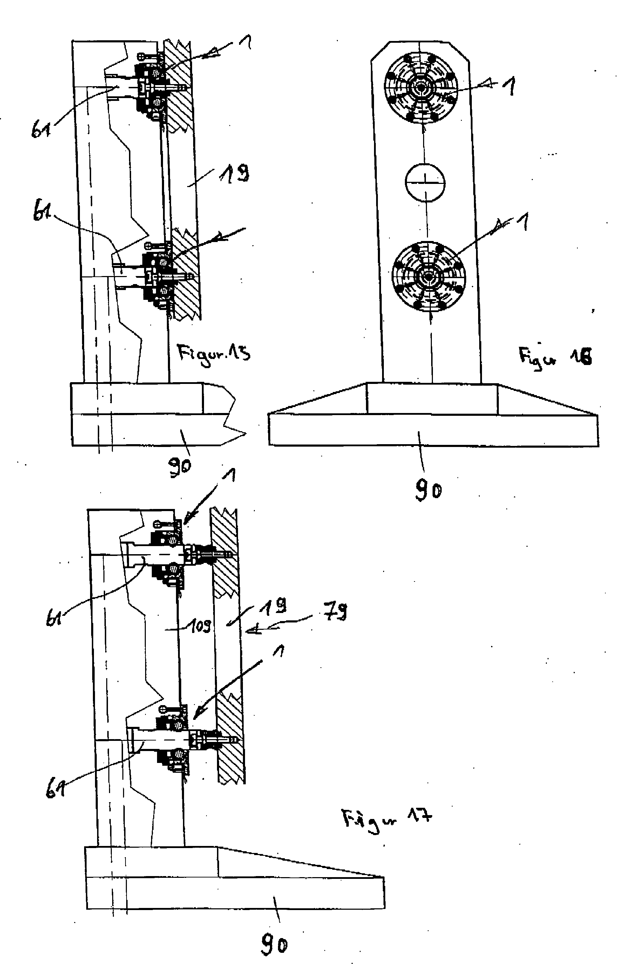

Der synchrone Verschiebeantrieb für die Hubkolben 71 ist in zwei verschiedenen Arbeitsstellungen dargestellt, wobei in gestrichelter Lage die verriegelte Stellung gezeigt ist, die vergrößert nochmals in Figur 13 dargestellt ist. In diesem verriegelten Zustand ist der Kniehebel 72 geknickt, weil der Kolben 74 in seine entsprechende Endlage in Zylinder 75 gefahren ist, und der Hubkolben 71 ist damit in den Innenraum des Schnellspannzylinders eingefahren, wobei alle Schnellspannzylinder 1 in einem Aufspannwinkel 109 versenkt eingelassen sind, wobei dieser Aufspannwinkel 109 Teil des Horizontalturms 19 ist.

Es ist noch dargestellt, dass in der entriegelten Lage der Hubkolben 71 in der Verriegelungseinrichtung im Schnellspannzylinder verriegelbar ist.

In Figur 10 werden durch eine Verriegelungseinrichtung die Federn 7 im Schnellspannzylinder 1 entlastet, wenn die gesamte Anordnung sich außer Funktion befindet. Der Hubkolben 71 deckt im Übrigen die zentrale Innenausnehmung des Schnellspannzylinders 1 in der in Figur 10 dargestellten Lage ab, so dass auch in diesem Ausführungsfall kein Schmutz in den Innenraum des Schnellspannzylinders 1 eindringen kann.

Wegen der seitlichen Verschiebung des Knickgestänges bei der Beaufschlagung - siehe die gestrichelten Linien in Figur 11 - ist es notwendig, den gesamten Antriebszylinder 75 in den Pfeilrichtungen 83 verschiebbar anzuordnen. Zu diesem Zweck ist der Zylinder 75 in einer Welle 80 gehalten, die in der Art einer Drehdurchführung in einer Ausnehmung im Aufspannwinkel 109 verschiebbar ist.

Im verschobenen Zustand kann somit jeweils die Ölzuführung zu dem Zylinder 75 über die Anschlüsse 77, 78 gewährleistet werden.

Bei manchen Maschinen fehlt eine Ölversorgung, so dass ein entsprechender Antrieb über einen hydraulischen Zylinder 75 nicht gegeben ist. Hier setzt das Ausführungsbeispiel nach den Figuren 13 bis 17 ein.

Im Ausführungsbeispiel nach Figur 13 und 14 ist dargestellt, dass ein synchroner Verschiebeantrieb auch durch eine handbetriebene Zahnstange 84 verwirklicht werden kann. Die Zahnstange 84 weist eine Verzahnung 87 auf, an der die Außenverzahnung eines Ritzels 85 anliegt, welches über einen Handhebel 86 frei verdrehbar ist. Auf diese Weise kann die Zahnstange 84 hin und her verschoben werden, und damit wird ebenfalls eine Auslenkung der Kniehebel 72 und ein entsprechender Verschiebeantrieb der Hubkolben 71 verwirklicht.

Ansonsten gelten für die gleichen Teile die gleichen Beschreibungen, wie vorstehend angegeben.

Es kann noch eine zusätzlich handbetätigte Schraubpumpe 88 vorgesehen werden, mit welcher die Druckölzuführung zu den Verriegelungseinrichtungen der einzelnen Schnellspannzylinder 1 vorgesehen ist.

Die Figur 14 zeigt die Draufsicht auf die Anordnung nach Figur 13 bei Entfernen der Werkstückpalette.

Die Figuren 15 bis 17 zeigen einen vollkommen passiven Verschiebeantrieb für die Hubkolben 61, weil diese lediglich passiv in dem Aufspannwinkel 109 verschiebbar sind, ohne dass diesem ein aktiver Verschiebeantrieb zugeordnet ist. Bei kleinen Maschinen ist es nicht notwendig, dass ein synchroner Verschiebeantrieb vorgesehen ist, insbesondere wenn auch leichte Werkstückpaletten verwendet werden. Es kann die Werkstückpalette dann per Hand in die zugeordnete Schnellspannvorrichtung eingehängt werden und dann einfach in Pfeilrichtung 79 verschoben werden, wodurch die Werkstückpalette 19 von ihrer Verschlebungslage nach Figur 16 in die verriegelte Lage nach Figur 17 befördert wird. Es handelt sich also nur um ein handfestes Hineindrücken der Einzugsnippel der Werkstückpalette in die zugeordneten Schnellspannzylinder, wobei aufgrund der verwendeten und vorher beschriebenen Zentrierungsmaßnahmen eine einwandfreie Führung bei beschädigungsfreiern Einlauf der Einzugsnippel in die Schnellspannzylinder gewährleistet ist.

### Zeichnungslegende

- 1: Schnellspannzylinder
- 2: Einzugsnippel
- 3: Fangspitze
- 4: Aufnahmeöffnung
- 5: Verriegelungskugeln
- 6: Deckel
- 7: Kolben
- 8: Kugelauflager
- 9: untere Federauflage
- 10: Feder
- 11: Gehäuse
- 12: Druckmittelzufuhr
- 13: Druckraum
- 14: Schraube
- 15: Spannpratze
- 16: Maschinentisch
- 17: Konusschräge
- 18: Konusaufnahme
- 19: Werkstückpalette
- 20: Stiftschraube
- 21: Hubkolben
- 22: Konusausnehmung
- 23: Anschluss für Heben
- 24: Anschluss für Senken
- 25: Anschluss zum Entriegeln
- 26: Anschluss für Blasluft
- 27: Steigkanal
- 28: Verschleißeinsatz
- 29: Schraube
- 30: Abdeckblech
- 31: Hubkolben
- 32: Einzugsnippel
- 33: Konusausnehmung
- 34: Konusspitze
- 35: Ansatz
- 36: Turbinenrad
- 37: Schrägbohrung
- 38: Turbinenflügel
- 39: Luftkanal
- 40: Ausnehmung
- 41: Auflagescheibe
- 42: Schraube
- 43: Abstand
- 44: Steigbohrung
- 45: Abdichtring
- 46: Freiraum
- 47: Ringspalt
- 48: Querbohrung
- 49: Querbohrung
- 50: Fangschraube
- 51: Gewindebolzen
- 52: Senkkopf
- 53: Aufhängehals
- 54: Fangkopf
- 55: Öffnung
- 56: Fangteil
- 57: Schraube
- 58: Verdrehsicherungsstift
- 59: Verriegelungsnut
- 60: Fangöffnung
- 61: Hubkolben
- 62: Schmutzauslauf
- 63: Pfeilrichtung
- 64: Anschlagfläche
- 65: Anschlagfläche
- 66: Abstand
- 67: Anschlagfläche
- 68: Einlaufschräge
- 69: Lasche
- 70: Schwenkbolzen
- 71: Hubkolben
- 72: Kniehebel

- 73: Kolbenstange
- 74: Kolben
- 75: Zylinder
- 76: Zylinderraum
- 77: Ölzufuhr (Ausstoß)
- 78: Ölzufuhr (Einzug)
- 79: Pfeilrichtung
- 80: Welle
- 81: Anschraublasche
- 82: Schwenklager
- 83: Pfeilrichtung
- 84: Zahnstange
- 85: Ritzel
- 86: Handhebel
- 87: Verzahnung
- 88: Schraubpumpe
- 89: Anschlagfläche
- 90: Horizontafturm
- 91: Maschinenwelle

## Patentansprüche

1. Schnellspannzylinder mit Führungseinrichtung für die gesteuerte Einführung eines an der Unterseite einer Werkstückpalette (19) befestigten Einzugsnippels (2) in die zentrale Aufnahmeöffnung im Gehäuse (11) des Schnellspannzylinders (1), **dadurch gekennzeichnet, dass** die Stirnseite des Einzugsnippels (2) in Einführrichtung nach hinten abgeschrägte Konusschrägen (17) aufweist, die mit einer zugeordneten - entgegengesetzt geschrägten Konusaufnahme (18) im Gehäuse (11) des Schnellspannzylinders (1) zusammenwirken.

2. Schnellspannzylinder nach Anspruch 1, **dadurch gekennzeichnet, dass** am Innenumfang der Aufnahmeöffnung ein Einlaufradius (102) angeordnet ist, der mit der Konusschräge (17) der Fangspitze (3) des Einzugsnippels (2) zusammenwirkt.

3. Schnellspannzylinder nach Anspruch 1 oder 2, **dadurch gekennzeichnet, dass** die Konusaufnahme (18) durch ein oberes Kugelauflager (8) und eine untere Federauflage (9) gebildet ist.

4. Schnellspannzylinder mit Führungseinrichtung für die gesteuerte Einführung eines an der Unterseite einer Werkstückpalette (19) befestigten Einzugsnippels (2) in die zentrale Aufnahmeöffnung im Gehäuse (11) des Schnellspannzylinders (1), **dadurch gekennzeichnet, dass** die Stirnseite des Einzugsnippels (2) eine Konusaufnahme (33) aufweist, die mit einer zugeordneten - entgegengesetzt geschrägten Konusspitze (34) im Gehäuse (11) des Schnellspannzylinders (1) zusammenwirkt.

5. Schnellspannzylinder nach einem der Ansprüche 1 bis 4, **dadurch gekennzeichnet, dass** die im Gehäuse (11) angeordneten Konuskörper (18, 34) gehäusefest angeordnet sind.

6. Schnellspannzylinder nach einem der Ansprüche 1 bis 5, **dadurch gekennzeichnet, dass** die im Gehäuse angeordneten Konuskörper (18, 22, 34) an einem im Gehäuse heb- und senkbar angeordneten Hubkolben (21, 31, 61, 71) befestigt sind.

7. Schnellspannzylinder nach einem der Ansprüche 1 bis 6, **dadurch gekennzeichnet, dass** im Bereich des Aufeinandertreffens von Einzugsnippel (2) und Hubkolben (21, 31, 61, 71) die entsprechenden, aneinander anliegenden und einander zugeordneten Flächen von Verschmutzungen freigehalten sind.

8. Schnellspannzylinder nach Anspruch 7, **dadurch gekennzeichnet, dass** im Hubkolben (21, 31, 61, 71) Blasöffnungen oder Kühlmittelöffnungen vorhanden sind, welche auf die zugeordneten Flächen des Einzugsnippels (2) gerichtet sind.

9. Schnellspannzylinder nach einem der Ansprüche 1 bis 8, **dadurch gekennzeichnet, dass** der Hubkolben (21) auch mehrteilig ausgebildet ist und dass der obere Teil aus einem leicht auswechselbaren Verschleißeinsatz (28) besteht.

10. Schnellspannzylinder nach einem der Ansprüche 1 bis 9, **dadurch gekennzeichnet, dass** im Hubkolben (21, 31) ein drehend angetriebenes Turbinenrad (36) angeordnet ist.

11. Schnellspannzylinder nach einem der Ansprüche 1 bis 10, **dadurch gekennzeichnet, dass** im Bereich der Konusspitze (34) des Hubkolbens (31) ein ringförmig umlaufender, im Querschnitt nasenförmiger Ansatz (35) vorgesehen ist, der die in den Zwischenraum zwischen Einzugsnippel (2) und dem Hubkolben (31) gelangende Späne zerhackt.

12. Schnellspannzylinder nach einem der Ansprüche 1 bis 11, **dadurch gekennzeichnet, dass** ein luftführender Raum an der Unterseite der Werkstückpalette (19) ausgebildet ist.

13. Schnellspannzylinder nach einem der Ansprüche 1 bis 12, **dadurch gekennzeichnet, dass** eine Sperrluftüberwachung zur Auflagekontrolle der planebenen Auflage der Werkstückpalette (19) auf der Oberseite des Deckels (6) vorhanden ist.

14. Schnellspannzylinder nach einem oder mehreren der Ansprüche 1 bis 13, **dadurch gekennzeichnet, dass** zwischen dem Einzugsnippel (2) und einem im Innenraum des Schnellspannzylinders angeordneten Hubkolben (21, 31, 61, 71) eine Fangeinrichtung (50, 53, 54, 56) zur mechanischen Koppelung des Einzugsnippels mit dem Hubkolben angeordnet ist.

15. Schnellspannzylinder nach einem oder mehreren der Ansprüche 1 bis 14, **dadurch gekennzeichnet, dass** bei mehreren parallel an der Unterseite einer Werkstückpalette angeordneten Einzugsnippeln, wobei jedem Einzugsnippel eine Fangeinrichtung in einem separaten Schnellspannzylinder zugeordnet ist, alle Fangeinrichtungen synchron angetrieben sind.

16. Schnellspannzylinder nach Anspruch 15, **dadurch gekennzeichnet, dass** die mit jeweils der Fangeinrichtung verbundenen Hubkolben (71) über ein Kniehebel-Gestänge (70, 72, 81, 82) mechanisch miteinander gekoppelt sind.

## Claims

1. Quick-grip cylinder with guide device for the controlled introduction of a draw-in nipple (2) fastened to the underside of a workpiece pallet (19) into the central receiving opening in the housing (11) of the quick-grip cylinder (1), **characterised in that** the end face of the draw-in nipple (2) has conical bevels (17) sloping off to the rear in the direction of introduction which act in conjunction with an associated oppositely bevelled conical receptacle (18) in the housing (11) of the quick-grip cylinder (1).

2. Quick-grip cylinder according to claim 1, **characterised in that** arranged on the inner perimeter of the receiving opening is an inlet radius (102) which acts in conjunction with the conical bevel (17) of the catch tip (3) of the draw-in nipple (2).

3. Quick-grip cylinder according to claim 1 or 2, **characterised in that** the conical receptacle (18) is formed by an upper ball race (8) and a lower spring support (9).

4. Quick-grip cylinder with guide device for the controlled introduction of a draw-in nipple (2) fastened to the underside of a workpiece pallet (19) into the central receiving opening in the housing (11) of the quick-grip cylinder (1), **characterised in that** the end face of the draw-in nipple (2) has a conical receptacle (33) which acts in conjunction with an associated oppositely bevelled conical tip (34) in the housing (11) of the quick-grip cylinder (1).

5. Quick-grip cylinder according to any of claims 1 to 4, **characterised in that** the conical members (18, 34) arranged in the housing (11) are arranged integral with the housing.

6. Quick-grip cylinder according to any of claims 1 to 5, **characterised in that** the conical members (18, 22, 34) arranged in the housing are fastened to a reciprocating piston (21, 31, 61, 71) arranged raisably and lowerably in the housing.

7. Quick-grip cylinder according to any of claims 1 to 6, **characterised in that** in the region where the draw-in nipple (2) and reciprocating piston (21, 31, 61, 71) meet the corresponding surfaces fitting against one another and associated with one another are kept free of contaminants.

8. Quick-grip cylinder according to claim 7, **characterised in that** in the reciprocating piston (21, 31, 61, 71) blowholes or openings for coolant are present that are directed at the associated surfaces of the draw-in nipple (2).

9. Quick-grip cylinder according to any of claims 1 to 8, **characterised in that** the reciprocating piston (21) is also constructed from a plurality of parts and that the upper part is composed of a readily exchangeable wear insert (28).

10. Quick-grip cylinder according to any of claims 1 to 9, **characterised in that** arranged in the ,reciprocating piston (21, 31) is a rotary driven turbine wheel (36).

11. Quick-grip cylinder according to any of claims 1 to 10, **characterised in that** in the region of the conical tip (34) of the reciprocating piston (31) an annular all-round shoulder (35) of lobe-shaped cross-section is provided which chops shavings coming into the space between the draw-in nipple (2) and the reciprocating piston (31).

12. Quick-grip cylinder according to any of claims 1 to 11, **characterised in that** a space carrying air is constructed on the underside of the workpiece pallet (19).

13. Quick-grip cylinder according to any of claims 1 to 12, **characterised in that** there is monitoring of blocked air for checking the level seating of the workpiece pallet (19) on the upper side of the cover (6).

14. Quick-grip cylinder according to one or more of claims 1 to 13, **characterised in that** between the draw-in nipple (2) and a reciprocating piston (21, 31, 61, 71) arranged in the interior of the quick-grip cylinder a catch device (50, 53, 54, 56) is arranged for the mechanical coupling of the draw-in nipple to the reciprocating piston.

15. Quick-grip cylinder according to one or more of claims 1 to 14, **characterised in that** in the case of a plurality of draw-in nipples arranged in parallel on the underside of a workpiece pallet, wherein each draw-in nipple is associated with a catch device in a separate quick-grip cylinder, all the catch devices are driven synchronously.

16. Quick-grip cylinder according to claim 15, **characterised in that** the reciprocating pistons (71) each connected to the catch device are mechanically linked to one another via a toggle lever rod assembly (70, 72, 81, 82).

## Revendications

1. Cylindre à serrage rapide comportant un dispositif de guidage pour introduire de manière commandée dans l'ouverture de réception centrale de l'enveloppe (11) du cylindre à serrage rapide (1) un manchon d'introduction (2) qui est fixé au côté inférieur d'une palette de pièces (19), **caractérisé en ce que** le côté frontal du manchon d'introduction (2) présente des biseaux coniques (17) qui sont inclinés vers l'arrière dans le sens de guidage et qui coopèrent avec un logement conique (18) associé qui est prévu dans l'enveloppe (11) dudit cylindre de serrage rapide (1) et qui est biseauté en sens inverse.

2. Cylindre à serrage rapide selon la revendication 1, **caractérisé en ce qu'**il est prévu sur la périphérie intérieure de l'ouverture de réception un rayon d'entrée (102) qui coopère avec le biseau conique (17) de la pointe de positionnement (3) du manchon d'introduction (2).

3. Cylindre à serrage rapide selon la revendication 1 ou 2, **caractérisé en ce que** le logement conique (18) est formé par un support de billes supérieur (8) et un élément d'appui de ressorts inférieur (9)

4. Cylindre à serrage rapide comportant un dispositif de guidage pour introduire de manière commandée dans l'ouverture de réception centrale de l'enveloppe (11) du cylindre à serrage rapide (1) un manchon d'introduction (2) qui est fixé au côté inférieur d'une palette de pièces (19), **caractérisé en ce que** le côté frontal du manchon d'introduction (2) présente un logement conique (33) qui coopère avec une pointe conique (34) associée qui est prévue dans l'enveloppe (11) dudit cylindre de serrage rapide (1) et qui est biseautée en sens inverse.

5. Cylindre à serrage rapide selon l'une des revendications 1 à 4, **caractérisé en ce que** les corps coniques (18, 34) disposés dans l'enveloppe (11) sont solidaires de celle-ci.

6. Cylindre à serrage rapide selon l'une des revendications 1 à 5, **caractérisé en ce que** les corps coniques (18, 22, 34) disposés dans l'enveloppe sont fixés à un piston alternatif (21, 31, 61, 71) qui est apte à être soulevé et abaissé dans ladite enveloppe.

7. Cylindre à serrage rapide selon l'une des revendications 1 à 6, **caractérisé en ce que** dans la zone où se rejoignent le manchon d'introduction (2) et le piston alternatif (21, 31, 61, 71), les surfaces correspondantes appliquées l'une contre l'autre et associées sont débarrassées des encrassements.

8. Cylindre à serrage rapide selon la revendication 7, **caractérisé en ce qu'**il est prévu dans le piston alternatif (21, 31, 61, 71) des ouvertures d'éjection ou des ouvertures pour agent réfrigérant qui sont dirigées vers les surfaces associées du manchon d'introduction (2).

9. Cylindre à serrage rapide selon l'une des revendications 1 à 8, **caractérisé en ce que** le piston alternatif (21) est aussi en plusieurs parties et **en ce que** sa partie supérieure se compose d'un embout d'usure (28) facilement remplaçable.

10. Cylindre à serrage rapide selon l'une des revendications 1 à 9, **caractérisé en ce qu'**il est prévu dans le piston alternatif (21, 31) une roue de turbine (36) entraînée en rotation.

11. Cylindre à serrage rapide selon l'une des revendications 1 à 10, **caractérisé en ce qu'**il est prévu dans la zone de la pointe conique (34) du piston alternatif (31) un épaulement annulaire (35) en forme de saillie, en coupe transversale, qui broie les copeaux arrivant dans l'espace intermédiaire entre le manchon d'introduction (2) et le piston alternatif (31).

12. Cylindre à serrage rapide selon l'une des revendications 1 à 11, **caractérisé en ce qu'**un espace de guidage d'air est formé sur le côté inférieur de la palette de pièces (19).

13. Cylindre à serrage rapide selon l'une des revendications 1 à 12, **caractérisé en ce qu'**il est prévu une surveillance de l'air de blocage pour contrôler l'appui plan de la palette de pièces (19) sur le côté supérieur du couvercle (6).

14. Cylindre à serrage rapide selon l'une au moins des revendications 1 à 13, **caractérisé en ce qu'**il est prévu, entre le manchon d'introduction (2) et un piston alternatif (21, 31, 61, 71) disposé dans l'espace intérieur du cylindre à serrage rapide, un dispositif d'arrêt (50, 53, 54, 56) pour l'accouplement mécanique du manchon d'Introduction avec le piston alternatif.

15. Cylindre à serrage rapide selon l'une des revendications 1 à 14, **caractérisé en ce que** si plusieurs manchons d'introduction parallèles sont prévus sur le côté inférieur d'une palette de pièces, auquel cas un dispositif d'arrêt disposé dans un cylindre à serrage rapide séparé est associé à chaque manchon, tous les dispositifs d'arrêt sont entraînés de manière synchrone.

16. Cylindre à serrage rapide selon la revendication 15, **caractérisé en ce que** les pistons alternatifs (71) reliés aux dispositifs d'arrêt respectifs sont accouplés entre eux mécaniquement par l'intermédiaire d'un système de leviers à genouillère (70, 72, 81, 82).
